# EUROPÄISCHE PATENTSCHRIFT

(11) **EP 0 358 956 B1**
(45) Veröffentlichungstag und Bekanntmachung des Hinweises auf die Patenterteilung: **03.11.1993**
(21) Anmeldenummer: 89114939.5
(22) Anmeldetag: 11.08.1989
(51) Int. Cl.: A61C 15/04

(54) **Reinigungsvorrichtung für den Raum zwischen der basalen Auflage eines Brückengliedes einer Zahnbrücke und der Schleimhaut des Kieferkammes**
Device for cleaning the cavity between a dental bridge element and the gum
Dispositif de nettoyage de l'espace entre un élément de pont dentaire et la gencive

(30) Priorität: 12.09.1988 DE 3831039
(43) Veröffentlichungstag der Anmeldung: 21.03.1990
(73) Patentinhaber: Bauer, Helmut, D-94032 Passau (DE)
(72) Erfinder: Bauer, Helmut, D-94032 Passau (DE)
(74) Vertreter: Patentanwälte Leinweber & Zimmermann

(56) Entgegenhaltungen:
- DE-A- 2 923 057
- DE-U- 8 708 369
- US-A- 4 008 727

## Beschreibung

Die Erfindung bezieht sich auf eine Vorrichtung zur Reinigung von Zwischenräumen im Zahnbereich mit einem Zugfaden, der in seiner Längsrichtung durch den Zwischenraum hindurchgezogen wird.

Eine derartige Vorrichtung ist als sogenannte "Zahnseide" seit langem bekannt. Hierbei wird ein einzelner, den Zugfaden bildender Seidenfaden jeweils in die in einer Zahnreihe zwischen benachbarten Zähnen begrenzten Zwischenräume eingeführt und in seiner sich quer zur Zahnreihe erstreckenden Längsrichtung durch den Zwischenraum hindurchgezogen, um in den Zwischenräumen verbliebene Verunreinigungen, wie Speiserückstände, zu entfernen. Bei lückenhaften Zahnreihen, in denen eine zwischen zwei natürlichen Zähnen bestehende Lücke von einem oder mehreren fehlenden Zähnen mit einer an den die Lücke begrenzenden natürlichen Zähnen befestigten Zahnbrücke wieder geschlossen worden ist, besteht jedoch die Schwierigkeit, daß zwischen der basalen Auflage der Zahnbrücke, also der zum Kiefer weisenden Unterseite der die Lücke überbrückenden künstlichen Zähne, und der Schleimhaut des Kieferkammes, also der den künstlichen Zähnen zugewandten Oberseite des zahnlosen Kieferbereichs, kein vollständiger Formschluß erreichbar ist. Dies ist insbesondere deswegen der Fall, weil der zahnlose Kieferbereich zu Schwunderscheinungen neigt, die zu einer Verschlechterung eines ursprünglich hergestellten Formschlusses zwischen Kiefer und Zahnbrücke führen. Daher tritt häufig ein Zwischenraum zwischen dem zahnlosen Kieferbereich und der darauf nicht vollständig aufsitzenden Zahnbrücke auf. In diesem Zwischenraum können sich Speisereste ansammeln, die bei Nichtentfernung zu unhygienischen Zuständen und Entzündungen führen.

Eine zuverlässige und wirkungsvolle Reinigung dieser zwischen Zahnbrücken und dem Kiefer gebildeten Zwischenräume ist durch eine Anwendung der bekannten Zahnseide nicht zu erwarten. Abgesehen von der Schwierigkeit, ein Stück Zahnseide zunächst durch den zwischen Zahnbrücke und Kiefer bestehenden Zwischenraum hindurchzufädeln, besteht der hauptsächliche Mangel darin, daß der im Verhältnis zur Breite einer Zahnlücke einen sehr viel kleineren Durchmesser aufweisende einzelne Zugfaden bei seiner quer zur Richtung der Zahnreihe erfolgenden Reinigungsbewegung jeweils nur einen im Verhältnis zur Breite der Lücke sehr kleinen Bereich erfassen kann, während der von dem Zugfaden gerade nicht berührte Bereich von der Reinigungsbewegung unbeeinflußt bleibt. Selbst wenn daher die Zahnseide an vielen aneinander angrenzenden Stellen durch den Zwischenraum hindurchgezogen würde, besteht abgesehen von dem für ein derartiges Vorgehen erforderlichen hohen Zeitaufwand die Gefahr, daß Verunreinigungen seitlich ausweichen und daher auch dann nicht erfaßt werden, wenn der einzelne Zugfaden viele Male an verschiedenen Stellen durch den Zwischenraum hindurchgezogen wird.

Diese Schwierigkeiten bestehen auch bei einer aus US-A-4 008 727 bekannten Weiterbildung des "Zahnseide"-Prinzips fort. Bei dieser bekannten Weiterbildung ist der einzige Zugfaden in einem mittigen Bereich seiner Länge durch Texturierung seiner Einzelfilamente in seinem Durchmesser etwas vergrößert. Die diesen mittigen Bereich einschließenden Enden des Zugfadens sind mit einer harten Beschichtung versehen, wodurch die Enden abgesehen von ihrem gegenüber dem mittigen Bereich verkleinerten Durchmesser eine gewisse Steifigkeit erhalten, durch die das Einführen des Zugfadens in Zahnzwischenräume erleichtert werden soll. Zwar bilden bei diesem bekannten Zugfaden die die radiale Aufweitung bewirkenden texturierten Schlingen der Einzelfilamente des Zugfadens eine Art von sich längs des Zugfadens erstreckendem Bürstenbereich, doch weist auch dieser Bürstenbereich einen im Verhältnis zur Breite einer Zahnlücke nur kleinen Durchmesser auf, so daß bei der quer zur Richtung der Zahnreihe erfolgenden Reinigungsbewegung ebenfalls nur ein im Verhältnis zur Breite der Lücke sehr kleiner Bereich erfaßt wird.

Der Erfindung liegt die Aufgabe zugrunde, eine Zahnreinigungsvorrichtung der eingangs genannten Art zu schaffen, die eine schnelle und wirkungsvolle Reinigung eines zwischen der basalen Auflage eines Brückengliedes einer Zahnbrücke und der Schleimhaut des Kieferkammes gebildeten Zwischenraumes erlaubt.

Erfindungsgemäß wird diese Aufgabe dadurch gelöst, daß zwei sich in einem Abstand zueinander erstreckende Zugfäden vorgesehen sind, die durch mindestens einen sich zwischen den beiden Zugfäden erstreckenden Querfaden miteinander verbunden sind, und daß an einem Endbereich der Zugfäden ein Einführungsteil angeordnet ist.

Da bei der erfindungsgemäßen Vorrichtung zwischen den beiden Zugfäden ein Querfaden oder mehrere Querfäden vorgesehen sind, ergibt sich eine strickleiterartige Struktur. Die sich quer zur Längsrichtung der Zugfäden, also quer zur Zugrichtung der Vorrichtung erstreckenden Querfäden überstreichen somit auf einer etwa der Länge der Querfäden entsprechenden Breite den zwischen den Brückengliedern der Zahnbrücke und dem darunterliegenden Kiefer gebildeten Zwischenraum, wenn die Vorrichtung quer zur Richtung der Zahnreihe durch den Zwischenraum hindurchgezogen wird. Dabei werden in dem Zwischenraum abgesetzte Verunreinigungen, wie Speiserückstände, schnell und sicher entfernt, da der oder die Querfäden quer zur Zugrichtung an den Verunreinigungen angreifen und diese vor sich herschieben. Insbesondere wölben sich die an den Verunreinigungen angreifenden Querfäden entgegengesetzt zur Zugrichtung leicht nach hinten, so daß die erfaßten Verunreinigungen schlingenförmig umgriffen werden. Ein seitliches Ausweichen der Verunreinigungen kann daher nicht auftreten. Die Einschließung der erfaßten Verunreinigungen in den von den Querfäden gebildeten Schlingen wird zusätzlich durch die beiden Zugfäden gefördert, deren sich von dem jeweiligen Querfaden aus in der Zugrichtung erstreckende Abschnitte den seitlichen Abschluß der Schlingen vervollständigen.

Im Rahmen der Erfindung ist es auch vorgesehen, daß an einem Endbereich der durch die Querfäden miteinander verbundenen Zugfäden ein Einführungsteil angeordnet ist. Ohne ein derartiges Einführungsteil wäre es sicherlich schwierig, die nachgiebigen und daher jeder Schubbelastung ausweichenden Zugfäden zu Beginn des Reinigungsvorgangs von einer Seite der Zahnbrücke her in den Zwischenraum einzufädeln und auf der anderen Seite wieder herauszuführen, bis das herausgeführte Ende zur Ausübung eines Zuges in der Längsrichtung der Zugfäden ergriffen werden kann. Das Einführungsteil ist daher mit einer geeigneten Steifigkeit ausgebildet, so daß es ähnlich bekannten Einfädlern für Nähfäden in das Öhr einer Nähnadel mit Leichtigkeit durch den Zwischenraum hindurchgeführt werden kann, um die Vorrichtung hinter sich herzuziehen.

Vorzugsweise ist bei der erfindungsgemäßen Vorrichtung mehr als ein Querfaden vorgesehen, wobei die Querfäden die gleiche Länge aufweisen und in der Längsrichtung der Zugfäden gleichmäßig voneinander beabstandet sind. Diese Ausführungsform ist einerseits herstellungsmäßig besonders günstig, weil die Vorrichtung durch Abschnitte einer regelmäßigen Strickleiterstruktur aus zwei einander parallelen Zugfäden und sich dazu senkrecht in regelmäßigen Abständen erstreckenden Querfäden erhalten werden kann. Andererseits laufen hierbei in einem einzigen Reinigungsvorgang mehrere Querfäden nacheinander durch den zu reinigenden Zwischenraum hindurch, so daß selbst dann, wenn der in Zugrichtung erste Querfaden nicht zu einem vollständigen Reinigungsergebnis führen sollte, die nachfolgenden Querfäden den Reinigungsvorgang wiederholen und damit eine hohe Sicherheit der Wirksamkeit erreicht ist.

In einer weiteren Zweckmäßigen Ausführungsform entspricht die Länge der Querfäden ungefähr einem mittleren Zahndurchmesser. Hierdurch ist die Vorrichtung besonders für den häufig vorkommenden Fall bemessen, daß die Zahnbrücke ein einziges Brückenglied zum Ersatz eines einzigen fehlenden Zahnes aufweist. Doch erweist sich diese Ausführungsform auch für Zahnbrücken mit mehreren Brückengliedern also mit einer Breite von mehr als einem Zahn als voll funktionsfähig, wobei während eines oder auch mehrerer Durchziehvorgänge lediglich auf eine derartige seitliche Versetzung zu achten ist, daß der zu reinigende Zwischenraum in seiner gesamten Breite überstrichen wird.

Zweckmäßigerweise ist das Einführungsteil in der Form eines im wesentlichen V-förmigen Bügels ausgebildet, dessen beide V-Schenkel sich jeweils vom Endbereich der beiden Zugfäden aus in deren Verlängerungsrichtung zum V-Scheitel hin erstrecken. Beim Einfädeln braucht daher zuerst nur der an den V-Scheitel angrenzende verjüngte Bereich durch den Zwischenraum hindurchgeführt zu werden, was wegen der kleinen Breitenausdehnung dieses Bereichs leicht möglich ist. Andererseits halten die vom V-Scheitel aus auseinanderlaufenden V-Schenkel die daran angreifenden Zugfäden auf Abstand, wobei dieser Abstand im wesentlichen der Länge der Querfäden entspricht. Damit ist sichergestellt, daß die Vorrichtung beim Durchzug durch den Zwischenraum im wesentlichen auf ihre volle, durch die Länge der Querfäden bestimmte Breite aufgespannt ist.

In einer zweckmäßigen weiteren Ausgestaltung ist der Bügel aus einem Draht aus mundverträglichem Stahl geformt. Bei dieser Materialwahl ist es leicht möglich, eine für den Einfädelvorgang geeignete Steifigkeit des Einführungsteils sicherzustellen, während andererseits eine gewisse Elastizität besteht, so daß das Einfädeln der Vorrichtung schonend und ohne die Gefahr von Verletzungen durch das Einführungsteil ausgeführt werden kann. Im übrigen werden durch die Mundverträglichkeit des Materials Mißempfindungen für den Benutzer vermieden.

Weiterhin erweist es sich hinsichtlich der Materialwahl als zweckmäßig, daß die Zugfäden und die Querfäden aus einem synthetischen Garn gebildet sind. Durch ein derartiges Material läßt sich einerseits eine hohe Reißfestigkeit und andererseits die Herstellung der Vorrichtung in einem hygienisch einwandfreien Zustand sicherstellen.

Vorteilhaft ist das Garn ein Bauschgarn. Durch die dabei vorhandene Flauschigkeit, insbesondere der Querfäden, wirken diese beim Durchgang durch den Zwischenraum wie eine Bürste, durch die auch sehr kleine Verunreinigungen aufgenommen und mitgeschleppt werden, so daß ein besonders hoher Reinigungsgrad erzielt wird.

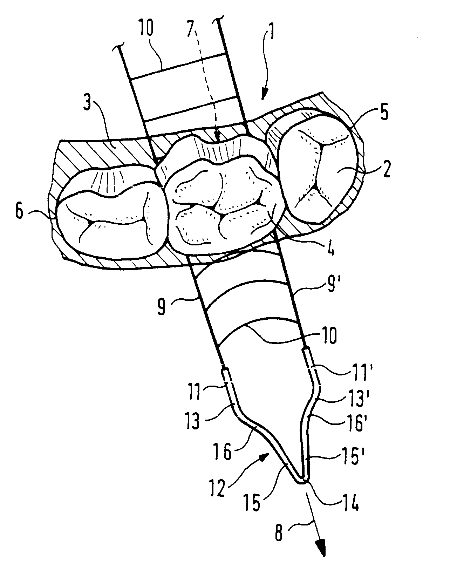

Weitere Merkmale, Einzelheiten und Vorteile der Erfindung ergeben sich aus der folgenden Beschreibung, in der ein Ausführungsbeispiel der Erfindung unter Bezugnahme auf die Zeichnung näher erläutert ist.

In der einzigen Zeichnungsfigur ist eine Ausführungsform der Vorrichtung zur Reinigung von Zwischenräumen im Zahnbereich während ihrer Anwendung an einer Zahnbrücke 1 in einer perspektivischen Ansicht ungefähr in Richtung auf die Kaufläche 2 der Zahnbrücke 1 und auf den darunterliegenden, schraffiert angedeuteten Kieferbereich 3 dargestellt. Die Zahnbrücke 1 weist dabei ein mittleres Brückenglied 4 auf, das eine durch einen fehlenden Zahn gebildete Lücke zwischen zwei Zähnen, an denen die Zahnbrücke 1 mit beidseits des Brückengliedes 4 angeordneten Kronen 5, 6 befestigt ist, überbrückt. Zwischen der der Kaufläche 2 entgegengesetzten Unterseite des Brückengliedes 4 und der zu dieser Unterseite weisenden Oberseite des Kieferbereichs 3 ist ein flacher Zwischenraum 7 begrenzt, der sich häufig nicht vermeiden läßt, da ein vollständiger Formschluß des Brückengliedes 4 mit dem Kieferbereich 3 wegen Schwunderscheinungen nicht dauernd erreichbar ist.

Durch den Zwischenraum 7 ist in der Darstellung der Zeichnungsfigur die Vorrichtung zur Reinigung von Zwischenräumen im Zahnbereich in einer sich quer zur Längsrichtung der Zahnbrücke 1 erstreckenden, durch einen Pfeil 8 angedeuteten Zugrichtung hindurchgezogen. Die Vorrichtung weist zwei sich in einem Abstand zueinander erstreckende Zugfäden 9, 9' auf, deren Länge mindestens ein Mehrfaches des mittleren Zahndurchmessers beträgt und die durch einen Anzahl von sich zwischen den beiden Zugfäden 9, 9' erstreckenden Querfäden 10 miteinander verbunden sind. Die Querfäden 10 sind in der Längsrichtung der sich in der Zugrichtung 8 erstreckenden Zugfäden 9, 9' gleichmäßig voneinander beabstandet, wobei der wechselseitige Abstand benachbarter Querfäden 10 bei dem dargestellten Ausführungsbeispiel etwa in der Größenordnung eines mittleren Zahndurchmessers liegt. Die Länge aller Querfäden 10 ist gleich und entspricht ungefähr einem mittleren Zahndurchmesser. Als geeignetes Material für die Zugfäden 9, 9' und die Querfäden 10 kommen synthetische Garne in Betracht, wobei insbesondere Bauschgarne wegen ihrer Flauschigkeit geeignet sind.

An dem in die Zugrichtung 8 weisenden Endbereich 11, 11' der Zugfäden 9, 9' ist ein Einführungsteil 12 befestigt, das in dem dargestellten Ausführungsbeispiel durch einen aus Draht geformten Bügel aus einem mundverträglichen Stahl gebildet ist. Der Bügel ist im wesentlichen V-förmig gestaltet, wobei sich die beiden V-Schenkel 13, 13' von dem in die Zugrichtung 8 weisenden Scheitelpunkt 14 der V-Form aus auseinanderlaufend entgegengesetzt zur Zugrichtung 8 zu den Endbereichen 11, 11' der Zugfäden 9, 9' erstrecken.

Im einzelnen gehen in dem dargestellten Ausführungsbeispiel die beiden V-Schenkel 13, 13' im Scheitelpunkt 14 gerundet ineinander über, wobei der Krümmungsradius des Übergangsbereichs im Verhältnis zum mittleren Zahndurchmesser klein ist.Vom gerundeten Übergangsbereich des Scheitelpunkts 14 aus erstrecken sich die beiden V-Schenkel 13, 13' mit leicht auseinander- laufenden Abschnitten 15, 15', deren Länge in der Größenordnung eines mittleren Zahndurchmessers liegt, zu daran anschließenden stärker divergierenden Abschnitten 16, 16', die bis zu einem der Länge der Querfäden 10 entsprechenden Abstand auseinanderlaufen und mit parallelen Abschnitten an die Enderbereiche 11, 11' der Zugfäden 9, 9' anschließen. Die Verbindung mit den Endbereichen 11, 11' kann beispielsweise durch Verkleben oder Verschweißen erfolgen, wobei zur Förderung der Haltbarkeit der Verbindung eine Aufrauhung, beispielsweise durch Anätzen, vorgesehen sein kann.

Wie aus der Zeichnungsfigur ferner verständlich ist, wird zur Durchführung eines Reinigungsvorgangs das Einführungsteil 12 von seinem Scheitelpunkt 14 her in der Zugrichtung 8 in den Zwischenraum eingeführt und durch diesen hindurchgeführt. Sodann kann das an der der Einführungsseite entgegengesetzten Seite des Zwischenraums 7 wieder austretende Einführungsteil 12 erfaßt und die Vorrichtung in der Zugrichtung 8 vollständig durch den Zwischenraum 7 hindurchgezogen werden. Dabei ist es auch möglich, durch einen zusätzlichen Angriff an dem dem Einführungsteil 12 entgegengesetzten Ende der strickleiterartigen Struktur die Vorrichtung mehrere Male in der Zugrichtung 8 und in der dazu entgegengesetzten Richtung hin und herzuziehen, bevor die Vorrichtung vollständig aus dem Zwischenraum 7 herausgezogen wird. In dem Zwischenraum 7 vorhandene Fremdkörper werden dabei von den Querfäden 10 erfaßt. Dabei wölben sich die Querfäden 10 entgegengesetzt zur Zugrichtung 8 konkav nach hinten, wie es in der Zeichnungsfigur auf der in die Zugrichtung 8 weisenden Seite der Zahnbrücke 1 dargestellt ist, so daß die zu entfernenden Fremdkörper von den konkav nach hinten gewölbten Querfäden 10 und den daran anschließenden Abschnitten der Zugfäden 9, 9' schlingenartig umschlossen und zwangsweise mitgeführt werden. Die Zugfäden 9, 9' werden dabei durch das Einführungsteil 12 etwa in einem der Länge der Querfäden 10 entsprechenden Abstand gehalten, so daß die strickleiterartige Struktur bei dem Reinigungsvorgang voll entfaltet ist und keine die Wirksamkeit störende zu große Annäherung der beiden Zugfäden 9, 9' auftritt. Dennoch erlaubt die Elastizität der V-Schenkel 13, 13' eine gewisse Breitenanpassung der Vorrichtung.

Bei dem dargestellten Ausführungsbeispiel beträgt die Länge der Querfäden 10 etwa 6 mm, was für solche Anwendungen, bei denen beispielsweise nur ein Frontzahn oder ein kleiner Backenzahn (Prämolar) ersetzt ist, zweckmäßig ist. Doch kann die Länge der Querfäden 10 erheblich größer, beispielsweise bis zu 2,5 cm sein, wenn die Vorrichtung an Zahnbrücken angewendet werden soll, bei denen beispielsweise ein großer Backenzahn (Molar) oder sogar mehrere Brückenglieder hintereinander angeordnet sind.

Die Zugfäden 9,9' und Querfäden 10 der Vorrichtung können mit geeigneten Arzneimitteln imprägniert sein. Hierdurch ist es möglich, mit dem Reinigungsvorgang gleichzeitig das Arzneimittel in dem Zwischenraum zu applizieren.

## Patentansprüche

1. Vorrichtung zur Reinigung von Zwischenräumen im Zahnbereich mit einem Zugfaden, der in seiner Längsrichtung durch den Zwischenraum hindurchgezogen wird, dadurch gekennzeichnet, daß zwei sich in einem Abstand zueinander erstreckende Zugfäden (9, 9') vorgesehen sind, die durch mindestens einen sich zwischen den beiden Zugfäden (9, 9') erstreckenden Querfaden (10) miteinander verbunden sind, und daß an einem Endbereich (11, 11') der Zugfäden (9, 9') ein Einführungsteil (12) angeordnet ist.

2. Vorrichtung nach Anspruch 1 mit mehr als einem Querfaden, dadurch gekennzeichnet, daß die Querfäden (10) die gleiche Länge aufweisen und in der Längsrichtung der Zugfäden (9, 9') gleichmäßig voneinander beabstandet sind.

3. Vorrichtung nach Anspruch 1 oder 2, dadurch gekennzeichnet, daß die Länge der Querfäden (10) ungefähr einem mittleren Zahndurchmesser entspricht.

4. Vorrichtung nach einem der Ansprüche 1 bis 3, dadurch gekennzeichnet, daß das Einführungsteil (12) in der Form eines im wesentlichen V-förmigen Bügels ausgebildet ist, dessen beide V-Schenkel (13, 13') sich jeweils vom Endbereich (11, 11') der beiden Zugfäden (9, 9') aus in deren Verlängerungsrichtung zum V-Scheitel (14) hin erstrecken.

5. Vorrichtung nach Anspruch 4, dadurch gekennzeichnet, daß der Bügel aus einem Draht aus mundverträglichem Stahl geformt ist.

6. Vorrichtung nach einem der Ansprüche 1 bis 5, dadurch gekennzeichnet, daß die Zugfäden (9, 9') und die Querfäden (10) aus einem synthetischen Garn gebildet sind.

7. Vorrichtung nach Anspruch 6, dadurch gekennzeichnet, daß das Garn ein Bauschgarn ist.

8. Vorrichtung nach einem der Ansprüche 1 bis 7, dadurch gekennzeichnet, daß mindestens die Querfäden (10) mit einem Arzneimittel imprägniert sind.

## Claims

1. Device for cleaning gaps in the tooth region with a drawing thread which in its longitudinal direction is drawn through the gap, characterized in that two drawing threads (9, 9') extending with clearance from one another are provided, which are connected to one another by at least one transverse thread (10) extending between the two drawing threads (9, 9'), and in that an insertion part (12) is arranged at one end region (11, 11') of the drawing threads (9, 9').

2. Device according to claim 1 with more than one transverse thread, characterized in that the transverse threads (10) are of the same length and in the longitudinal direction of the drawing threads (9, 9') are evenly spaced from one another.

3. Device according to claim 1 or 2, characterized in that the length of the transverse threads (10) corresponds approximately to an average tooth diameter.

4. Device according to one of claims 1 to 3, characterized in that the insertion part (12) is constructed in the form of a substantially V-shaped strap, the two V-limbs (13, 13') of which extend in each case from the end region (11, 11') of the two drawing threads (9, 9') in their direction of elongation towards the V-apex (14).

5. Device according to claim 4, characterized in that the strap is formed from a wire of mouth-compatible steel.

6. Device according to one of claims 1 to 5, characterized in that the drawing threads (9, 9') and the transverse threads (10) are formed from a synthetic yarn.

7. Device according to claim 6, characterized in that the yarn is a textured yarn.

8. Device according to one of claims 1 to 7, characterized in that at least the transverse threads (10) are impregnated with a medicine.

## Revendications

1. Dispositif de nettoyage d'espaces intermédiaires dans la région des dents avec un fil à tirer qui est tiré suivant sa direction longitudinale à travers l'espace intermédiaire, caractérisé en ce que sont prévus deux fils à tirer (9, 9') s'étendant à une certaine distance l'un de l'autre qui sont reliés l'un à l'autre par au moins un fil transversal (10) s'étendant entre les deux fils à tirer (9, 9'), et en ce qu'une partie d'introduction (12) est disposée à une zone d'extrémité (11, 11') des fils à tirer (9, 9').

2. Dispositif selon la revendication 1, comprenant plus d'un fil transversal, caractérisé en ce que les fils transversaux (10) ont la même longueur et présentent le même écart régulier les uns par rapport aux autres dans la direction longitudinale des fils à tirer (9, 9').

3. Dispositif selon la revendication 1 ou 2, caractérisé en ce que la longueur des fils transversaux (10) correspond à peu près à un diamètre de dent moyen.

4. Dispositif selon l'une des revendications 1 à 3, caractérisé en ce que la partie d'introduction (12) est réalisée sous la forme d'un étrier essentiellement en forme de V dont les deux branches du V (13, 13') s'étendent respectivement depuis la zone d'extrémité (11, 11') des deux fils à tirer (9, 9') dans la direction de prolongement de celles-ci vers le sommet du V (14).

5. Dispositif selon la revendication 4, caractérisé en ce que l'étrier est formé à partir d'un fil en acier compatible avec la bouche.

6. Dispositif selon l'une des revendications 1 à 5, caractérisé en ce que les fils à tirer (9, 9') et les fils transversaux (10) sont réalisés en un fil synthétique.

7. Dispositif selon la revendication 6, caractérisé en ce que le fil est un fil gonflé.

8. Dispositif selon l'une des revendications 1 à 7, caractérisé en ce qu'au moins les fils transversaux (10) sont imprégnés d'un médicament.
